(19) Europäisches Patentamt
European Patent Office
Office européen des brevets

(11) EP 4 336 598 A1

(12) EUROPEAN PATENT APPLICATION
published in accordance with Art. 153(4) EPC

(43) Date of publication:
**13.03.2024 Bulletin 2024/11**

(21) Application number: **22884102.9**

(22) Date of filing: **21.10.2022**

(51) International Patent Classification (IPC):
***H01M 4/62*** *(2006.01)* ***H01M 4/139*** *(2010.01)*
***H01M 4/1391*** *(2010.01)* ***H01M 4/48*** *(2010.01)*
***H01M 4/38*** *(2006.01)* ***H01M 4/58*** *(2010.01)*
***H01M 10/052*** *(2010.01)* ***C01B 32/174*** *(2017.01)*
***H01M 4/02*** *(2006.01)*

(52) Cooperative Patent Classification (CPC):
**C01B 32/174; H01M 4/02; H01M 4/139; H01M 4/1391; H01M 4/38; H01M 4/48; H01M 4/58; H01M 4/62; H01M 10/052;** Y02E 60/10

(86) International application number:
**PCT/KR2022/016187**

(87) International publication number:
**WO 2023/068880 (27.04.2023 Gazette 2023/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.10.2021 KR 20210142054**

(71) Applicant: **LG Energy Solution, Ltd.**
**Seoul 07335 (KR)**

(72) Inventors:
- **LEE, Sangmin**
  **Daejeon 34122 (KR)**
- **KWON, Yohan**
  **Daejeon 34122 (KR)**

(74) Representative: **Hoffmann Eitle**
**Patent- und Rechtsanwälte PartmbB**
**Arabellastraße 30**
**81925 München (DE)**

# (54) ANODE PRE-DISPERSION SOLUTION, ANODE COMPOSITION COMPRISING SAME, ANODE FOR LITHIUM SECONDARY BATTERY COMPRISING ANODE COMPOSITION, LITHIUM SECONDARY BATTERY COMPRISING ANODE, AND METHOD FOR PREPARING ANODE COMPOSITION

(57) The present invention relates to a negative electrode pre-dispersion solution, a negative electrode composition comprising the same, a negative electrode for a lithium secondary battery comprising a negative electrode composition, a lithium secondary battery comprising a negative electrode, and a preparation method of a negative electrode composition.

[Figure 1]

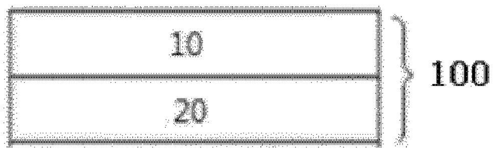


EP 4 336 598 A1

## Description

[Technical Field]

This application claims priority to and the benefit of Korean Patent Application No. 10-2021-0142054 filed in the Korean Intellectual Property Office on October 22, 2021, the entire contents of which are incorporated herein by reference.

The present invention relates to a negative electrode pre-dispersion solution, a negative electrode composition comprising the same, a negative electrode for a lithium secondary battery comprising a negative electrode composition, a lithium secondary battery comprising a negative electrode, and a preparation method of a negative electrode composition.

[Background Art]

Due to the rapid increase in the use of fossil fuels, the demand for the use of alternative energy or clean energy is increasing, and as a part, the most actively researched field is a power generation and power storage field using electrochemical reactions.

Currently, a secondary battery is a representative example of an electrochemical device using such electrochemical energy, and its use area is gradually extending.

As technology development and demand for mobile devices increase, a demand for secondary batteries as energy sources is rapidly increasing. Among these secondary batteries, a lithium secondary battery having high energy density and voltage, a long life cycle, and a low self-discharge rate has been commercialized and widely used. In addition, as an electrode for such a high-capacity lithium secondary battery, research is being actively conducted on a method for manufacturing a high-density electrode having a higher energy density per unit volume.

In general, a secondary battery consists of a positive electrode, a negative electrode, an electrolyte, and a separator. The negative electrode includes a negative electrode active material for intercalating and deintercalating lithium ions from the positive electrode, and silicon-based particles having a large discharge capacity may be used as the negative electrode active material.

In particular, according to the recent demand for high-density energy battery, as the negative electrode active material, research on a method of increasing the capacity by using a silicon-based compound such as Si/C or SiOx, which has a capacity at least 10 times larger than that of a graphite-based material, is being actively conducted. However, in the case of a silicon-based compound as a high-capacity material, compared to graphite used in the related art, the capacity is large, but there is a problem in that the volume expands rapidly during the charging process to cut off a conductive path, thereby deteriorating the battery characteristics.

Accordingly, in order to solve the problems of using the silicon-based compound as the negative electrode active material, there have been discussed various methods for suppressing the volume expansion itself or preventing the conductive path from being disconnected, such as a method of regulating a driving potential, a method of further coating a thin film on an active material layer, and a method of controlling the particle size of the silicone-based compound. However, in the case of the methods, since the performance of the battery may be deteriorated, there is a limit in application, and there is still a limit to the commercialization of manufacturing a negative electrode battery having a high content of the silicon-based compound. Therefore, even in the case of using the silicone-based compound as the active material to improve capacity performance, there is a need for research on a conductive material capable of preventing a conductive path from being damaged due to volume expansion of the silicon-based compound and a pre-dispersion solution capable of uniformly dispersing a conductive material deformed under predetermined conditions in order to achieve the purpose.

[Prior Arts]

(Patent Document 1) Japanese Unexamined Patent Publication No. 2009-080971

[Disclosure]

[Technical Problem]

In a silicon-based negative electrode, the degree of dispersion of carbon nanotubes and a bonding relationship between SWCNT and a silicon-based active material later are important. When a specific functional group is included as a functional group of a dispersant included in a carbon nanotube pre-dispersion solution, it has been found through research that the dispersion degree is excellent, and there is a characteristic of strengthening the bonding force between

the carbon nanotube and silicon by forming hydrogen bonds with -OH groups on the surface of the silicon-based active material later.

Accordingly, the present invention relates to a negative electrode pre-dispersion solution, a negative electrode composition comprising the same, a negative electrode for a lithium secondary battery comprising a negative electrode composition, a lithium secondary battery comprising a negative electrode, and a preparation method of a negative electrode composition.

[Technical Solution]

According to an embodiment of the present invention, there is provided a negative electrode pre-dispersion solution including: a pre-dispersion material containing carbon nanotubes and a dispersant; and a dispersion medium, in which the dispersant includes carboxyl groups as a functional group, the solid content of the pre-dispersion material is 5% or less based on the negative electrode pre-dispersion solution, and 20 parts by weight or more and 60 parts by weight or less of the carbon nanotubes; and 40 parts by weight or more and 80 parts by weight or less of the dispersant are included based on 100 parts by weight of the pre-dispersion material.

According to another embodiment of the present invention, there is provided a negative electrode composition including a silicon-based active material; the negative electrode pre-dispersion solution according to the present invention; and a negative electrode binder, in which the silicon-based active material is included in an amount of 60 parts by weight or more based on 100 parts by weight of the negative electrode composition.

According to yet another embodiment of the present invention, there is provided a preparation method of a negative electrode composition including forming a pre-dispersion material by mixing carbon nanotubes and a dispersant containing carboxyl groups as a functional group; including a dispersion medium in the pre-dispersion material so that the solid content of the pre-dispersion material is 5% or less; dispersing the pre-dispersion material containing the dispersion medium; forming a mixture by mixing a negative electrode binder with water and adding and first mixing the pre-dispersion material to the mixture; and adding and second mixing a silicon-based active material to the mixed mixture, in which 20 parts by weight or more and 60 parts by weight or less of the carbon nanotubes; and 40 parts by weight or more and 80 parts by weight or less of the dispersant are included based on 100 parts by weight of the pre-dispersion material.

According to still another embodiment of the present invention, there is provided a negative electrode for a lithium secondary battery including a negative electrode current collector layer; and a negative electrode active material layer including the negative electrode composition according to the present invention formed on one surface or both surfaces of the negative electrode current collector layer.

According to still yet embodiment of the present invention, there is provided a lithium secondary battery including a positive electrode; the negative electrode for the lithium secondary battery according to the present invention; a separator provided between the positive electrode and the negative electrode; and an electrolyte.

[Advantageous Effects]

According to an embodiment of the present invention, in the case of the negative electrode pre-dispersion solution, the dispersant includes carboxyl groups as a functional group, the solid content of the pre-dispersion material is 5% or less based on the negative electrode pre-dispersion solution, and 20 parts by weight or more and 60 parts by weight or less of the carbon nanotubes; and 40 parts by weight or more and 80 parts by weight or less of the dispersant are used based on 100 parts by weight of the pre-dispersion material.

According to the present invention, the negative electrode pre-dispersion solution is a solution in which the carbon nanotubes are first dispersed before being included in the negative electrode composition, and has excellent dispersibility of carbon nanotubes by satisfying the solid content and the content of carbon nanotubes of the pre-dispersion material, and the content of the dispersant in the pre-dispersion solution in predetermined ranges.

In addition, in the case of using an existing carbon-based negative electrode, there is no major problem, but when a silicon-based active material is used, there is a problem in that the conductive path between the conductive materials is broken due to the expansion of the volume. In order to solve the problem, instead of adding a separate composition to the negative electrode composition according to the embodiment of the present invention, carboxyl groups are included as a functional group of the dispersant included in the carbon nanotube pre-dispersion solution to form hydrogen bonds with -OH groups on the surface of the silicon-based active material, thereby strengthening the bonding force between the carbon nanotubes and silicon later.

When the bonding force between carbon nanotubes and silicon is strengthened, the path between the conductive materials is maintained even after repeated charging and discharging, and the silicon active material may be uniformly used. Accordingly, it is possible to minimize the volume expansion during charging and discharging in the case of using existing silicon-based active materials by using the negative electrode composition according to the present invention.

[Description of Drawings]

FIG. 1 is a diagram illustrating a stacked structure of a negative electrode for a lithium secondary battery according to an embodiment of the present invention.
FIG. 2 is a diagram illustrating a stacked structure of a lithium secondary battery according to an embodiment of the present invention.
FIG. 3 is a diagram illustrating results of evaluation of half-cell initial capacities of negative electrodes of Examples 1 and 2 according to the present invention.
FIG. 4 is a diagram illustrating results of evaluation of half-cells of negative electrodes of Examples 1 and 2 according to the present invention.
FIG. 5 is a diagram illustrating results of CHC cycle evaluation of negative electrodes prepared in Examples 1 and 2 according to the present invention and Comparative Example 1.

<Explanation of Reference Numerals and Symbols>

10: Negative electrode current collector layer
20: Negative electrode active material layer
30: Separator
40: Positive electrode active material layer
50: Positive electrode current collector layer
100: Negative electrode for lithium secondary battery
200: Positive electrode for lithium secondary battery

[Best Mode]

Before describing the present invention, some terms are first defined.
In the present specification, when a part "comprises" a certain component, unless explicitly described to the contrary, it will be understood to further include other components without the exclusion of any other elements.
In the present specification, ‘p to q’ means a range of ‘p or more and q or less’.
In the present specification, "specific surface area" is measured by a BET method, and is specifically calculated from the adsorption amount of nitrogen gas under a liquid nitrogen temperature (77 K) using BELSORP-mino II manufactured by BEL Japan Co., Ltd. That is, in the present invention, the BET specific surface area may mean a specific surface area measured by the measurement method.
In the present specification, "Dn" means an average particle diameter, and means a particle diameter at an n% point of a cumulative distribution of the number of particles according to the particle diameter. That is, D50 is a particle diameter at 50% point of the cumulative distribution of the number of particles according to the particle diameter, D90 is a particle diameter at 90% point of the cumulative distribution of the number of particles according to the particle diameter, and D10 is a particle diameter at 10% point of the cumulative distribution of the number of particles according to the particle diameter. Meanwhile, the average particle diameter may be measured using a laser diffraction method. Specifically, after dispersing powder to be measured in a dispersion medium, when particles pass through a laser beam by introducing a commercially available laser diffraction particle size measuring device (e.g., Microtrac S3500), a difference in diffraction pattern depending on a particle size is measured to calculate a particle size distribution.
In the present specification, the meaning that the polymer includes certain monomers as a monomer unit means that the monomers participate in a polymerization reaction and are included as a repeating unit in the polymer. In the present specification, when the polymer includes monomers, it is interpreted in the same manner as that the polymer includes monomers as a monomer unit.
In the present specification, the term ’polymer’ is understood to be used in a broad meaning including a copolymer unless specified as a ’homopolymer’.
In the present specification, the weight average molecular weight (Mw) and the number average molecular weight (Mn) are molecular weights obtained by using, as a standard material, a monodisperse polystyrene polymer (standard sample) of various polymerization degrees commercially available for measuring molecular weights, and polystyrene conversion measured by gel permeation chromatography (GPC). In the present specification, the molecular weight means a weight average molecular weight unless otherwise specified.
Hereinafter, Examples of the present invention will be described in detail so as to easily implement those skilled

in the art. However, the present invention may be implemented in various different forms and is not limited to the embodiments described herein.

An embodiment of the present invention provides a negative electrode pre-dispersion solution including a pre-dispersion material containing carbon nanotubes and a dispersant; and a dispersion medium, in which the dispersant includes carboxyl groups as a functional group, the solid content of the pre-dispersion material is 5% or less based on the negative electrode pre-dispersion solution, and 20 parts by weight or more and 60 parts by weight or less of the carbon nanotubes; and 40 parts by weight or more and 80 parts by weight or less of the dispersant are included based on 100 parts by weight of the pre-dispersion material.

In an embodiment of the present invention, the pre-dispersion solution is a dispersion solution before the material is included in the negative electrode composition, and the pre-dispersion solution and the negative electrode composition are used with different meanings.

In an embodiment of the present invention, the dispersant may be one selected from the group consisting of xanthan gum; alginate; and a compound represented by the following Chemical Formula 1.

[Chemical Formula 1]

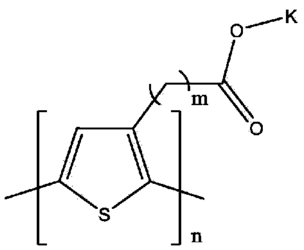

in Chemical Formula 1,

m is an integer of 1 to 10, and
n is an integer of 1 to 1000.

In an embodiment of the present invention, m may be an integer of 1 to 10, preferably an integer of 1 to 5, and more preferably an integer of 1 to 3.

In an embodiment of the present invention, there is provided a negative electrode pre-dispersion solution in which the dispersant includes one selected from the group consisting of poly[3-(potassium-4-butanoate)thiophne-2,5-diyl] (PPBP); xanthan gum; and alginate.

In an embodiment of the present invention, the dispersant may include CMC.

In an embodiment of the present invention, the dispersant includes carboxyl groups as a functional group, and may be a conjugated polymer in which single bonds and double bonds are alternately present in molecules.

In an embodiment of the present invention, the dispersant includes a carboxyl group as a functional group, and when the dispersant is used, the dispersibility of carbon nanotubes is excellent. In particular, when the dispersant is included in the negative electrode composition later, the bonds between the carbon nanotubes and a silicon-based active material may be strengthened through hydrogen bonds with Si-OH groups on the surface of the silicon-based active material used together.

As described above, the dispersant according to the present invention includes the carboxyl group as the functional group, which may form hydrogen bonds with the Si-OH groups on the surface of the silicon-based active material. The hydrogen bond may be formed with an amine group, but in the case of having the carboxyl group as in the present invention, the enthalpy between functional groups related to the hydrogen bond strength is 21 kJ/mol or 5.0 kcal/mol in the case of having the carboxyl group, and 8 kJ/mol or 1.9 kcal/mol in the case of having amine group. That is, when determined from the same number and situation of functional groups, when a dispersant having an amine group is applied, the binding force with the Si active material is lower than that of the dispersant having the carboxyl group intended in the present invention, so that an effect of improving electrical connectivity may be sharply decreased. Accordingly, when the dispersant having the carboxyl group according to the present invention is used, it may be expected to have the effect of improving the binding force with Si together with the dispersion performance.

Among the dispersants, in particular, the PPBT dispersant is a conjugated polymer having carboxyl groups and alternately having single bonds and double bonds in a main chain. The PPBT dispersant has a characteristic capable of particularly improving dispersibility by wrapping SWCNT well by $\pi$-$\pi$ interaction between a surface with $\pi$ electrons

present in the main chain and a surface with π electrons of SWCNT, and simultaneously effectively debundling SWCNTs present in a bundle form under the influence of carboxyl groups present in a PPBT side chain.

In an embodiment of the present invention, the solid content of the pre-dispersion material may be 5% or less based on the negative electrode pre-dispersion solution.

In another embodiment, the solid content of the pre-dispersion material may be 5% or less, preferably 3% or less, more preferably 2% or less, and 0.1% or more, preferably 1% or more based on the negative electrode pre-dispersion solution.

The solid content of the pre-dispersion material satisfies the above range based on the negative electrode pre-dispersion solution, and as the range is satisfied, the dispersion of the carbon nanotubes included in the pre-dispersion material is efficiently made, and the viscosity range may satisfy a certain range, and thus aggregation of the pre-dispersion solution does not occur.

That is, carbon nanotubes with a large specific surface area are used in the pre-dispersion solution according to the present invention, and in this case, it is characterized that only when the solid content satisfies the above range, the viscosity range enough to be dispersed may be exhibited, and the smooth pre-dispersion may be performed.

In an embodiment of the present invention, there is provided a negative electrode pre-dispersion solution in which 20 parts by weight or more and 60 parts by weight or less of the carbon nanotubes; and 40 parts by weight or more and 80 parts by weight or less of the dispersant are included based on 100 parts by weight of the pre-dispersion material.

In another embodiment of the present invention, based on 100 parts by weight of the pre-dispersion material, the carbon nanotubes may satisfy 20 parts by weight or more and 60 parts by weight or less, preferably 25 parts by weight or more and 55 parts by weight or less, more preferably 30 parts by weight or more and 50 parts by weight or less.

In yet another embodiment of the present invention, based on 100 parts by weight of the pre-dispersion material, the dispersant may satisfy 40 parts by weight or more and 80 parts by weight or less, preferably 45 parts by weight or more and 75 parts by weight or less, more preferably 50 parts by weight or more and 70 parts by weight or less.

As such, as the contents of the carbon nanotubes and the dispersant in the pre-dispersion material satisfy the above ranges, it is possible to form a viscosity range of the mixture enough to be dispersed thereafter. When the content of carbon nanotubes is lower than the above range, the effect of improving conductivity is reduced, and when the content of carbon nanotubes is higher than the above range, aggregation between the carbon nanotubes increases and thus, dispersion is not performed smoothly.

In an embodiment of the present invention, the dispersion medium is a nonionic compound without ionic functional groups and preferably a compound that may serve as a negative electrode binder after film formation, do not affect the electrical properties, or has a low decomposition temperature that may be removed by heat treatment at the time of manufacturing the electrode. In addition, the dispersion medium more preferably has ionicity by a polar solvent, or has hydroxyl groups as a functional group to improve the solubility in the solvent.

Specifically, in an embodiment of the present invention, the dispersion medium may be water.

In an embodiment of the present invention, there is provided a negative electrode pre-dispersion solution in which the viscosity of the negative electrode pre-dispersion solution is 100 cP or more and 10,000 cP or less.

In another embodiment of the present invention, the viscosity of the negative electrode pre-dispersion solution may be 100 cP or more and 10,000 cP or less, preferably 300 cP or more and 7,000 cP or less.

The viscosity of the negative electrode pre-dispersion solution may vary depending on the solid content of the pre-dispersion material and the pre-dispersion material, but as described above, when the solid content of the pre-dispersion material and the pre-dispersion material are used, the above ranges may be satisfied. In particular, the pre-dispersion material for the negative electrode pre-dispersion solution is included in the content part, and adjusts the viscosity by the dispersion process to be described below. When the pre-dispersion material is included in the negative electrode composition later by satisfying the viscosity range, the mixing may be excellent, so that the output of the secondary battery is improved.

That is, according to an embodiment of the present invention, the negative electrode pre-dispersion solution relates to a pre-dispersion solution in which carbon nanotubes with high hydrophobic properties are first dispersed, and may suppress the aggregation of dot-type conductive materials having high hydrophobicity when applied to the negative electrode later to have excellent performance of the electrode.

In an embodiment of the present invention, the negative electrode pre-dispersion solution adjusts the content part of the solid by first mixing carbon nanotubes and the dispersant and then adding the dispersion medium and may be dispersed by using a homogenizer capable of high stress or pressure or a homomixer capable of mixing at a high speed or a mill device using beads.

Thereafter, the negative electrode pre-dispersion solution according to the present invention may be prepared by a method of confirming whether a constant particle size is shown by performing PSD particle size analysis, and then confirming whether a predetermined slope is shown in the dispersion solution by confirming a shear Viscosity curve using a rheometer.

In an embodiment of the present invention, there is provided a negative electrode pre-dispersion solution in which the weight average molecular weight of the dispersant is 10,000 g/mol or more and 100,000 g/mol or less.

In another embodiment, the weight average molecular weight of the dispersant may satisfy a range of 10,000 g/mol or more and 100,000 g/mol or less, preferably 10,000 g/mol or more and 50,000 g/mol or less.

As such, when the weight average molecular weight of the dispersant satisfies the above range, so that the viscosity of the pre-dispersion solution itself may be adjusted within a predetermined range, thereby preventing aggregation of carbon nanotubes.

In an embodiment of the present invention, there is provided a negative electrode composition comprising a silicon-based active material; the negative electrode pre-dispersion solution according to the present invention; and a negative electrode binder, in which the silicon-based active material is included in an amount of 60 parts by weight or more based on 100 parts by weight of the negative electrode composition.

Instead of adding a separate composition to the negative electrode composition according to an embodiment of the present invention, carboxyl groups are included as a functional group of the dispersant included in the carbon nanotube pre-dispersion solution to form hydrogen bonds with - OH groups on the surface of the silicon-based active material later, thereby strengthening the bonding force between carbon nanotubes and silicon.

In an embodiment of the present invention, there is provided the negative electrode composition in which the silicon-based active material includes one or more selected from the group consisting of SiOx ($x = 0$), SiOx ($0 < x < 2$), SiC, and Si alloys.

In an embodiment of the present invention, there is provided the negative electrode composition in which the silicon-based active material includes one or more selected from the group consisting of SiOx ($x = 0$), SiOx ($0 < x < 2$), and metal impurities and the SiOx ($x = 0$) is included in an amount of 70 parts by weight or more based on 100 parts by weight of the silicon-based active material.

In another embodiment of the present invention, the SiOx ($x = 0$) may be included in an amount of 70 parts by weight or more, preferably 80 parts by weight or more, more preferably 90 parts by weight or more, and 100 parts by weight or less, preferably 99 parts by weight or less, more preferably 95 parts by weight or less, based on 100 parts by weight of the silicon-based active material.

Since the silicone-based active material is included in the same content part as the above in the negative electrode composition, the dispersion solution having carboxyl groups included in the pre-dispersion solution later is bound with the OH groups of the surface of the silicone-based active material through hydrogen bonds later by satisfying the range to strengthen the binding between the carbon nanotubes and the active material.

In an embodiment of the present invention, the silicon-based active material may be, in particular, pure silicon (Si) as the silicon-based active material. The using of pure silicon (Si) as the silicon-based active material means including pure Si particles (SiOx ($x = 0$)) that are not bound with other particles or elements in the above range, based on 100 parts by weight of the total silicon-based active material as described above.

In the case of the silicon-based active material, the capacity is significantly high compared to a graphite-based active material used in the related art so that attempts to apply the silicon-based active material are increasing, but a volume expansion rate is high during a charging and discharging process, so that it is limited to a case of using a small amount of the silicon-based active material mixed with the graphite-based active material.

Accordingly, in the case of the present invention, even while using only the silicon-based active material as the negative electrode active material to improve capacity performance, in order to solve the problems, the negative electrode pre-dispersion solution is prepared to improve the dispersibility of carbon nanotubes and strengthen the binding with the active material, thereby solving the existing problems.

Meanwhile, an average particle diameter (D50) of the silicone-based active material of the present invention may be 5 $\mu$m to 10 $\mu$m, specifically 5.5 $\mu$m to 8 $\mu$m, and more specifically 6 $\mu$m to 7 $\mu$m. When the average particle diameter is included in the above range, the viscosity of negative electrode slurry is formed in an appropriate range by including the specific surface area of the particles in a suitable range. Accordingly, the dispersion of the particles constituting the negative electrode slurry is facilitated. In addition, as the size of the silicon-based active material has a value greater than or equal to the range of the lower limit, and since a contact area between the silicon particles and the conductive materials is excellent by a composite consisting of the conductive material and the negative electrode binder in the negative electrode slurry, so that a possibility that a conductive network will continue is increased, thereby increasing the capacity retention rate. Meanwhile, when the average particle diameter satisfies the range, excessively large silicon particles are excluded to form a smooth surface of the negative electrode, thereby preventing current density non-uniformity during charging and discharging.

In an embodiment of the present invention, the silicon-based active material generally has a characteristic BET surface area. The BET surface area of the silicone-based active material is preferably 0.01 to 150.0 $m^2/g$, more preferably 0.1 to 100.0 $m^2/g$, particularly preferably 0.2 to 80.0 $m^2/g$, and most preferably 0.2 to 18.0 $m^2/g$. The BET surface area is measured according to DIN 66131 (using nitrogen).

In an embodiment of the present invention, the silicon-based active material may exist in, for example, a

crystalline or amorphous form, and is preferably not porous. The silicon particles are preferably spherical or fragmented particles. As an alternative, but less preferably, the silicon particles may also have a fibrous structure or be in the form of a silicon-containing film or coating.

In an embodiment of the present invention, there is provided the negative electrode composition, in which the silicone-based active material is included in an amount of 60 parts by weight or more based on 100 parts by weight of the negative electrode composition.

In another embodiment of the present invention, the silicone-based active material may be included in an amount of 60 parts by weight or more, preferably 65 parts by weight or more, more preferably 70 parts by weight or more, and 95 parts by weight or less, preferably 90 parts by weight or less, more preferably 80 parts by weight or less, based on 100 parts by weight of the negative electrode composition.

The negative electrode composition according to the present invention uses specific conductive material and negative electrode binder capable of holding a volume expansion rate during the charging and discharging process even when a silicon-based active material with a significantly high capacity is used within the above range to have an excellent output characteristic in charging and discharging without lowering the performance of the negative electrode even by including the range.

In an embodiment of the present invention, the silicon-based active material may have a non-spherical shape, and its circularity is, for example, 0.9 or less, for example, 0.7 to 0.9, for example, 0.8 to 0.9, for example, 0.85 to 0.9.

In the present invention, the circularity is determined by Equation 1 below, wherein A represents an area, and P represents a boundary line.

[Equation 1]

$$4\pi A/P^2$$

In the related art, it has been common to use only a graphite-based compound as the negative electrode active material, but recently, as the demand for high-capacity batteries increases, attempts to mix and use silicon-based compounds to increase the capacity are increasing. However, in the case of the silicon-based compounds, there is a limitation in that the volume rapidly expands during the charging/discharging process to damage a conductive path formed in the negative electrode active material layer, thereby reducing the performance of the battery again, and a certain conductive material may be included.

In an embodiment of the present invention, there is provided the negative electrode composition further comprising a negative electrode conductive material, in which the negative electrode conductive material includes one or more selected from the group consisting of a dot-type conductive material; and a planar conductive material.

In the embodiment of the present invention, the dot-type conductive material may be used to improve the conductivity of the negative electrode, and may have conductivity without causing a chemical change. Specifically, the conductive material may be at least one selected from the group consisting of natural graphite, artificial graphite, carbon black, acetylene black, Ketjen black, channel black, furnace black, lamp black, thermal black, conductive fiber, fluorocarbon, aluminum powder, nickel powder, zinc oxide, potassium titanate, titanium oxide and polyphenylene derivatives, and preferably carbon black in terms of high conductivity and excellent dispersibility.

In an embodiment of the present invention, the dot-type conductive material may have a BET specific surface area of 40 $m^2/g$ or more and 70 $m^2/g$ or less, preferably 45 $m^2/g$ or more and 65 $m^2/g$ or less, more preferably 50 $m^2/g$ or more and 60 $m^2/g$ or less.

In the embodiment of the present invention, the particle diameter of the dot-type conductive material may be 10 nm to 100 nm, preferably 20 nm to 90 nm, and more preferably 40 nm to 60 nm.

In an embodiment of the present invention, the conductive material may include a planar conductive material.

The planar conductive material may serve to improve conductivity by increasing a surface contact between silicon particles in the negative electrode, and simultaneously suppress the disconnection of the conductive path due to the volume expansion.

In an embodiment of the present invention, the planar conductive material may include at least one selected from the group consisting of plate-like graphite, graphene, graphene oxide, and graphite flake, preferably plate-like graphite.

In an embodiment of the present invention, an average particle diameter (D50) of the planar conductive material may be 2 $\mu$m to 7 $\mu$m, specifically 3 $\mu$m to 6 $\mu$m, and more specifically 4 $\mu$m to 5 $\mu$m. When the range is satisfied, the planar conductive material is easily dispersed without causing an excessive increase in viscosity of the negative electrode slurry due to a sufficient particle size. Therefore, the dispersion effect is excellent when dispersing using the same equipment and time.

In an embodiment of the present invention, there is provided the negative electrode composition in which the

planar conductive material has D10 of 0.5 μm or more and 1.5 μm or less, D50 of 2.5 μm or more and 3.5 μm or less, and D90 of 7.0 μm or more and 15.0 μm or less.

In an embodiment of the present invention, the planar conductive material may have a BET specific surface area of 100 $m^2/g$ or more.

In another embodiment of the present invention, the planar conductive material may have a BET specific surface area of 100 $m^2/g$ or more and 500 $m^2/g$ or less, preferably 150 $m^2/g$ or more and 300 $m^2/g$ or less, more preferably 200 $m^2/g$ or more and 300 $m^2/g$ or less.

Other conductive materials may include linear conductive materials such as carbon nanotubes included in the negative electrode pre-dispersion solution. The carbon nanotubes may be bundle type carbon nanotubes. The bundle type carbon nanotube may include a plurality of carbon nanotube units. Specifically, as used herein, the term 'bundle type' refers to, unless otherwise stated, a bundle or rope type secondary shape, in which a plurality of carbon nanotube units are arranged side by side or entangled in substantially the same orientation in a longitudinal direction of the carbon nanotube units. The carbon nanotube unit has a graphite sheet in the form of a cylinder having a nano-size diameter, and has an sp2 bond structure. In this case, the carbon nanotube unit may exhibit characteristics of a conductor or a semiconductor according to rolling angle and structure of the graphite sheet. The bundle type carbon nanotubes may be uniformly dispersed during manufacturing of the negative electrode compared to entangled type carbon nanotubes, and the conductive network in the negative electrode may be smoothly formed, thereby improving the conductivity of the negative electrode.

In an embodiment of the present invention, the carbon nanotubes may be SWCNTs.

In an embodiment of the present invention, the average length of the SWCNTs may satisfy a range of 500 nm or more and 20 μm or less.

In an embodiment of the present invention, the negative electrode pre-dispersion solution may mean pre-dispersed carbon nanotubes, and the negative electrode pre-dispersion solution includes the pre-dispersed carbon nanotubes and a dispersant.

That is, in an embodiment of the present invention, when the negative electrode pre-dispersion solution is included in the negative electrode, the dispersion medium is removed and the negative electrode pre-dispersion solution may include the pre-dispersed carbon nanotubes and the dispersant.

In an embodiment of the present invention, there is provided the negative electrode composition, in which the negative electrode conductive material is included in an amount of 5 parts by weight or more and 40 parts by weight or less based on 100 parts by weight of the negative electrode composition.

In another embodiment, the negative electrode conductive material may be included in an amount of 5 parts by weight or more and 40 parts by weight or less, preferably 5 parts by weight or more and 30 parts by weight or less, more preferably 7 parts by weight or more and 25 parts by weight or less based on 100 parts by weight of the negative electrode composition.

In an embodiment of the present invention, there is provided the negative electrode composition in which the negative electrode pre-dispersion solution is included in an amount of 0.01 part by weight or more and 20 parts by weight or less based on 100 parts by weight of the negative electrode composition.

In another embodiment, the negative electrode pre-dispersion solution may be included in an amount of 0.01 part by weight or more and 20 parts by weight or less, preferably 0.02 part by weight or more and 18 parts by weight or less, more preferably 0.03 part by weight or more and 15 parts by weight or less based on 100 parts by weight of the negative electrode composition.

In an embodiment of the present invention, the negative electrode pre-dispersion solution may be used as a conductive material.

In this case, the negative electrode pre-dispersion solution may satisfy a solid content in a range of 5% or less.

In an embodiment of the present invention, as the negative electrode pre-dispersion solution satisfies the composition and the ratio, the negative electrode pre-dispersion solution does not significantly affect the lifespan characteristics of conventional lithium secondary batteries, and increases chargeable and dischargeable points to have an excellent output characteristic at a high C-rate.

The negative electrode conductive material according to the present invention has a completely different configuration from a conductive material applied to the positive electrode. That is, the negative electrode conductive material according to the present invention serves to hold a contact point between the silicon-based active materials having a very large volume expansion of the electrode by charging and discharging, and the positive electrode conductive material serves as a buffer of a buffering role when rolled and to impart some conductivity. Accordingly, the configuration and role of the positive electrode conductive material are completely different from those of the negative electrode conductive material of the present invention.

In addition, the negative electrode conductive material according to the present invention is applied to the silicon-based active material, and has a configuration completely different from the conductive material applied to the graphite-based active material. That is, the conductive material used in the electrode having the graphite-based active

material simply has smaller particles than the active material to have the characteristics of improving output properties and imparting some conductivity. Accordingly, like the present invention, the configuration and the role of the conductive material are completely different from the negative electrode conductive material applied together with the silicon-based active material.

In an embodiment of the present invention, the plate-like conductive material used as the negative electrode conductive material described above has a structure and a role different from those of the carbon-based active material generally used as the negative electrode active material. Specifically, the carbon-based active material used as the negative electrode active material may be artificial graphite or natural graphite, and refers to a material that is processed and used into a spherical shape or dotted shape to facilitate the storage and release of lithium ions.

Meanwhile, the plate-like conductive material used as the negative electrode conductive material is a material having a plane or plate-like shape, and may be expressed as plate-like graphite. That is, the plate-like conductive material is a material included to maintain a conductive path in the negative electrode active material layer and refers to a material for securing a conductive path in a planar shape inside the negative electrode active material layer, not for storing and releasing lithium.

That is, in the present invention, the use of plate-like graphite as the conductive material means the use as a material which is processed into a planar shape or plate-like shape to secure a conductive path, not the role of storing or releasing lithium. In this case, the negative electrode active material included together has high capacity characteristics for lithium storage and release, and serves to store and release all lithium ions transferred from the positive electrode.

On the other hand, in the present invention, the use of the carbon-based active material as the active material means the use as a material which is processed into a dotted shape or a spherical shape to server to store or release lithium.

In an embodiment of the present invention, the negative electrode binder may include at least one selected from the group consisting of polyvinylidenefluoridehexafluoropropylene copolymer (PVDF-co-HFP), polyvinylidenefluoride, polyacrylonitrile, polymethylmethacrylate, polyvinyl alcohol, carboxymethyl cellulose (CMC), starch, hydroxypropyl cellulose, regenerated cellulose, polyvinylpyrrolidone, tetrafluoroethylene, polyethylene, polypropylene, polyacrylic acid, ethylene-propylene-diene monomer (EPDM), sulfonated EPDM, styrene butadiene rubber (SBR), fluororubber, poly acrylic acid and materials in which hydrogens thereof are substituted with Li, Na or Ca, and also include various copolymers thereof.

The negative electrode binder according to an embodiment of the present invention serves to hold the active material and the conductive material in order to prevent distortion and structural deformation of the negative electrode structure in volume expansion and relaxation of the silicon-based active material. If the role is satisfied, all general binders may be applied, specifically, an aqueous binder may be used, and more specifically, a PAM-based binder may be used.

In an embodiment of the present invention, the negative electrode binder may be included in an amount of 30 parts by weight or less, preferably 25 parts by weight or less, more preferably 20 parts by weight or less, and 5 parts by weight or more and 10 parts by weight or more based on 100 parts by weight of the negative electrode composition.

As compared to the existing carbon-based negative electrode, when using a Si-based negative electrode as the negative electrode, the aqueous binder is applied in the weight part, so that a dot-type conductive material having a low functional group content may be used, and according to the characteristics, the dot-type conductive material has hydrophobicity, so that the binding strength with the conductive material/binder become excellent.

In an embodiment of the present invention, there is provided the negative electrode composition in which the hydroxyl groups (-OH) on the surface of the silicon-based active material and the carboxyl functional groups of the negative electrode pre-dispersion solution form hydrogen bonds with each other.

After all, the negative electrode pre-dispersion solution according to the present invention may be used as a material capable of strengthening the binding between the carbon nanotubes and the silicon-based active material while serving as the dispersant, and may improve the dispersibility of the carbon nanotubes and maintain the conductive path of the conductive material by using the dispersant according to the present invention.

In an embodiment of the present invention, there is provided a preparation method of a negative electrode composition including forming a pre-dispersion material by mixing carbon nanotubes and a dispersant containing carboxyl groups as a functional group; including a dispersion medium in the pre-dispersion material so that the solid content of the pre-dispersion material is 5% or less; dispersing the pre-dispersion material containing the dispersion medium; forming a mixture by mixing a binder with water and adding and first mixing the pre-dispersion material to the mixture; and adding and second mixing a silicon-based active material to the mixed mixture. Here, the negative electrode composition includes 20 parts by weight or more and 60 parts by weight or less of the carbon nanotubes and 40 parts by weight or more and 80 parts by weight or less of the dispersant based on 100 parts by weight of the pre-dispersion material.

In an embodiment of the present invention, the preparation method of the negative electrode composition may include forming negative electrode slurry by including a slurry forming solvent in the negative electrode composition including a negative electrode active material, a negative electrode conductive material, and a negative electrode binder.

Specifically, the negative electrode slurry is formed by forming a mixture by mixing the binder with water and adding and first mixing the pre-dispersion material to the mixture; and adding and second mixing the silicon-based active material to the mixed mixture.

In an embodiment of the present invention, the solid content of the negative electrode slurry may satisfy 10% to 40%, and the negative electrode slurry may be applied on a negative electrode current collector to form a negative electrode.

In an embodiment of the present invention, there is provided the preparation method of the negative electrode composition in which the negative electrode composition may further include a conductive material, and specifically, further includes one or more selected from the group consisting of a dot-type conductive material and a planar conductive material in the first mixing step.

In the preparation method of the negative electrode composition, each composition and content are the same as described above.

In an embodiment of the present invention, there is provided the preparation method of the negative electrode composition in which the first mixing and the second mixing steps are steps of mixing at 2,000 rpm to 3,000 rpm for 10 minutes to 60 minutes.

In an embodiment of the present invention, there is provided the preparation method of the negative electrode composition in which the dispersing of the pre-dispersion material is dispersing using a dispersing device capable of dispersing at high stress, high pressure, or high speed.

The dispersing of the pre-dispersion material may specifically include adding the pre-dispersion material including carbon nanotubes and a dispersant containing carboxyl groups as a functional group in water and dispersing the mixture using an ultrasonicator.

In an embodiment of the present invention, there is provided a negative electrode for a lithium secondary battery including a negative electrode current collector layer; and a negative electrode active material layer containing the negative electrode composition according to the present invention formed on one surface or both surfaces of the negative electrode current collector layer.

FIG. 1 is a diagram illustrating a stacked structure of a negative electrode for a lithium secondary battery according to an embodiment of the present invention. Specifically, it can be seen that a negative electrode 100 for the lithium secondary battery includes a negative electrode active material layer 20 on one surface of a negative electrode current collector layer 10, and FIG. 1 illustrates that the negative electrode active material layer is formed on one surface, but the negative electrode active material layer may be formed on both surfaces of the negative electrode current collector layer.

In an embodiment of the present invention, the negative electrode current collector layer generally has a thickness of 1 μm to 100 μm. Such a negative electrode current collector layer is not particularly limited as long as the negative electrode current collector layer has high conductivity without causing a chemical change in the corresponding battery, and for example, copper, stainless steel, aluminum, nickel, titanium, calcined carbon, copper or stainless steel surface-treated with carbon, nickel, titanium, silver, etc., an aluminum-cadmium alloy, etc. may be used. In addition, the bonding strength of the negative electrode active material may be strengthened by forming fine unevenness on the surface, and may be used in various forms, such as a film, a sheet, a foil, a net, a porous body, a foam, a non-woven body, and the like.

In an embodiment of the present invention, there is provided the negative electrode for the lithium secondary battery in which the thickness of the negative electrode current collector layer is 1 μm or more and 100 μm or less, and the thickness of the negative electrode active material layer is 20 μm or more and 500 μm or less.

However, the thickness may be variously modified according to a type and use of the negative electrode to be used, but is not limited thereto.

In an embodiment of the present invention, there is provided a lithium secondary battery including a positive electrode; the negative electrode for the lithium secondary battery according to the present invention; a separator provided between the positive electrode and the negative electrode; and an electrolyte.

FIG. 2 is a diagram illustrating a stacked structure of a lithium secondary battery according to an embodiment of the present invention. Specifically, there may be confirmed a negative electrode 100 for the lithium secondary battery including a negative electrode active material layer 20 on one surface of a negative electrode current collector layer 10, and there may be confirmed a positive electrode 200 for the lithium secondary battery including a positive electrode active material layer 40 on one surface of a positive electrode current collector layer 50. It is illustrated that the negative electrode 100 for the lithium secondary battery and the positive electrode 200 for the lithium secondary battery are formed in a stacked structure with a separator 30 interposed therebetween.

In particular, the secondary battery according to an embodiment of the present specification may include the negative electrode for the lithium secondary battery described above. Specifically, the secondary battery may include a negative electrode, a positive electrode, a separator interposed between the positive electrode and the negative electrode, and an electrolyte, and the negative electrode is the same as the above-described negative electrode. Since

the negative electrode has been described above, a detailed description thereof will be omitted.

The positive electrode may include a positive electrode current collector and a positive electrode active material layer formed on the positive electrode current collector and including a positive electrode active material.

In the positive electrode, the positive electrode current collector is not particularly limited as long as it has conductivity without causing a chemical change in the battery, and for example, stainless steel, aluminum, nickel, titanium, sintered carbon or aluminum or stainless steel surface-treated with carbon, nickel, titanium, silver, etc. may be used. In addition, the positive electrode current collector may have a thickness of typically 3 to 500 μm, and fine unevenness may be formed on the surface of the current collector to increase the adhesion of the positive electrode active material. For example, the positive electrode current collector may be used in various forms, such as a film, a sheet, a foil, a net, a porous body, a foam, and a non-woven body.

The positive electrode active material may be a commonly used positive electrode active material. Specifically, the positive electrode active material may include layered compounds such as lithium cobalt oxide ($LiCoO_2$) and lithium nickel oxide ($LiNiO_2$), or compounds substituted with one or more transition metals; lithium iron oxides such as $LiFe_3O_4$; lithium manganese oxides of Chemical Formula $Li_{1+c1}Mn_{2-c1}O_4$ ($0 \leq c1 \leq 0.33$), such as $LiMnO_3$, $LiMn_2O_3$, $LiMnO_2$, etc.; lithium copper oxide ($Li_2CuO_2$) ; vanadium oxides such as $LiV_3O_8$, $V_2O_5$, and $Cu_2V_2O_7$; Ni site-type lithium nickel oxides represented by Chemical Formula $LiNi_{1-c2}M_{c2}O_2$ (wherein, M is at least one selected from the group consisting of Co, Mn, Al, Cu, Fe, Mg, B and Ga, and satisfies $0.01 \leq c2 \leq 0.6$); lithium-manganese composite oxides represented by Chemical Formula $LiMn_{2-c3}M_{c3}O_2$ (wherein, M is at least one selected from the group consisting of Co, Ni, Fe, Cr, Zn, and Ta, and satisfies $0.01 \leq c3 \leq 0.6$) or $Li_2Mn_3MO_8$ (wherein, M is at least one selected from the group consisting of Fe, Co, Ni, Cu, and Zn.); $LiMn_2O_4$ in which part of Li in Chemical Formula is substituted with alkaline earth metal ions; and the like, but is not limited thereto. The positive electrode may also be Li-metal.

In an embodiment of the present invention, the positive electrode active material includes a lithium composite transition metal compound including nickel (Ni), cobalt (Co) and manganese (Mn), and the lithium composite transition metal compound includes single particles or secondary particles, and the average particle diameter (D50) of the single particles may be 1 μm or more.

For example, the average particle diameter (D50) of the single particles may be 1 μm or more and 12 μm or less, 1 μm or more and 8 μm or less, 1 μm or more and 6 μm or less, more than 1 μm and 12 μm or less, more than 1 μm and 8 μm or less, or more than 1 μm and 6 μm or less.

The single particles may have excellent particle strength even when the average particle diameter (D50) is formed in a small particle diameter of 1 μm or more and 12 μm or less. For example, the single particles may have the particle strength of 100 to 300 MPa when rolled with a force of 650 $kgf/cm^2$. Accordingly, even when the single particles are rolled with a strong force of 650 $kgf/cm^2$, an increase in fine particles in the electrode due to particle breakage is alleviated, thereby improving the lifespan characteristics of the battery.

The single particles may be prepared by mixing and firing a transition metal precursor and a lithium raw material. The secondary particles may be prepared by a method different from that of the single particles, and the composition may be the same as or different from the composition of the single particles.

The method of forming the single particles is not particularly limited, but in general, the single particles may be formed by over-firing of increasing a firing temperature, and prepared by using additives such as grain growth promoters that help over-firing, or by changing a starting material, etc.

For example, the firing is performed at a temperature capable of forming single particles. In order to form the single particles, firing needs to be performed at a higher temperature than when preparing the secondary particles, and for example, when the precursor composition is the same, the firing needs to be performed at a temperature of 30°C to 100°C higher than when preparing the secondary particles. The firing temperature for forming the single particles may vary depending on a metal composition in the precursor. For example, when a high-Ni NCM-based lithium composite transition metal oxide having a nickel (Ni) content of 80 mol% or more is used to form single particles, the firing temperature may be about 700°C to 1000°C, preferably about 800°C to 950°C. When the firing temperature satisfies the range, the positive electrode active material including single particles having excellent electrochemical properties may be prepared. When the firing temperature is less than 790°C, a positive electrode active material including a lithium composite transition metal compound in the form of secondary particles may be prepared, and when the firing temperature is more than 950°C, excessive firing occurs, so that a layered crystal structure is not properly formed to deteriorate electrochemical properties.

In the present specification, the single particles are the term used to be distinguished from the secondary particles formed by aggregation of tens to hundreds of conventional primary particles, and a concept that includes a single particle consisting of one primary particle and a quasi-single particle form, which is an aggregate of 30 or less of primary particles.

Specifically, in the present invention, the single particle may be in the form of a single particle consisting of one primary particle or a quasi-single particle that is an aggregate of 30 or less primary particles, and the secondary particle may be in the form of an aggregation of hundreds of primary particles.

In the embodiment of the present invention, the lithium composite transition metal compound as the positive electrode active material further includes secondary particles, and the average particle diameter (D50) of the single particles is smaller than the average particle diameter (D50) of the secondary particles.

In the present invention, the single particle may be in the form of a single particle consisting of one primary particle or a quasi-single particle that is an aggregate of 30 or less primary particles, and the secondary particle may be in the form of an aggregation of hundreds of primary particles.

The lithium composite transition metal compound described above may further include secondary particles. The secondary particle means a form formed by aggregation of primary particles, and may be distinguished from a concept of a primary particle and a single particle including a form of one single particle, or a quasi-single particle that is an aggregate of 30 or less primary particles.

The particle diameter (D50) of the secondary particle may be 1 μm to 20 μm, and 2 μm to 17 μm, preferably 3 μm to 15 μm. The specific surface area (BET) of the secondary particle may be 0.05 $m^2/g$ to 10 $m^2/g$, preferably 0.1 $m^2/g$ to 1 $m^2/g$, and more preferably 0.3 $m^2/g$ to 0.8 $m^2/g$.

In an additional embodiment of the present invention, the secondary particles are aggregates of primary particles, and the average particle diameter (D50) of the primary particles is 0.5 μm to 3 μm. Specifically, the secondary particles may be in the form of aggregates of hundreds of primary particles, and the average particle diameter (D50) of the primary particles may be 0.6 μm to 2.8 μm, 0.8 μm to 2.5 μm, or 0.8 μm to 1.5 μm.

When the average particle diameter (D50) of the primary particles satisfies the range, a single-particle positive electrode active material having excellent electrochemical properties may be formed. If the average particle diameter (D50) of the primary particles is too small, the number of aggregates of primary particles forming the lithium nickel-based oxide particles increases, so that an effect of suppressing the occurrence of particle cracking during rolling decreases, and if the average particle diameter (D50) of the primary particles is too large, a lithium diffusion path inside the primary particles may be lengthened, so that the resistance is increased and output characteristics may be deteriorated.

According to an additional embodiment of the present invention, the average particle diameter (D50) of the single particles is smaller than the average particle diameter (D50) of the secondary particles. Accordingly, even if the single particle is formed with a small particle diameter, the single particle may have excellent particle strength to reduce an increase in fine particles in the electrode due to particle breakage, thereby improving the lifespan characteristics of the battery.

In an embodiment of the present invention, the average particle diameter (D50) of the single particles is 1 μm to 18 μm smaller than the average particle diameter (D50) of the secondary particles.

For example, the average particle diameter (D50) of the single particles may be 1 μm to 16 μm, 1.5 μm to 15 μm, or 2 μm to 14 μm smaller than the average particle diameter (D50) of the secondary particles.

When the average particle diameter (D50) of the single particles is smaller than the average particle diameter (D50) of the secondary particles, for example, when the range is satisfied, the single particles may have excellent particle strength even if the single particles are formed with a small particle diameter to reduce the increase in fine particles in the electrode due to particle breakage, thereby improving the lifespan characteristics of the battery and improving the energy density.

According to an additional embodiment of the present invention, the single particles are included in an amount of 15 parts by weight to 100 parts by weight based on 100 parts by weight of the positive electrode active material. The single particles may be included in an amount of 20 parts by weight to 100 parts by weight, or 30 parts by weight to 100 parts by weight based on 100 parts by weight of the positive electrode active material.

For example, the single particles may be included in an amount of 15 parts by weight or more, 20 parts by weight or more, 25 parts by weight or more, 30 parts by weight or more, 35 parts by weight or more, 40 parts by weight or more, or 45 parts by weight or more based on 100 parts by weight of the positive electrode active material. The single particles may be included in an amount of 100 parts by weight or less based on 100 parts by weight of the positive electrode active material.

When the single particles are included in the range, excellent battery characteristics may be exhibited in combination with the above-described negative electrode material. In particular, when the amount of the single particles is 15 parts by weight or more, the increase in fine particles in the electrode due to particle breakage during the rolling process after electrode fabrication may be reduced, thereby improving the lifespan characteristics of the battery.

In an embodiment of the present invention, the lithium composite transition metal compound may further include secondary particles, and the secondary particles may be included in an amount of 85 parts by weight or less based on 100 parts by weight of the positive electrode active material. The secondary particles may be included in an amount of 80 parts by weight or less, 75 parts by weight or less, or 70 parts by weight or less based on 100 parts by weight of the positive electrode active material. The secondary particles may be included in an amount of 0 part by weight or more based on 100 parts by weight of the positive electrode active material.

When the range is satisfied, the above-described effects may be maximized due to the presence of the single-particle positive electrode active material. In the case of including the secondary-particle positive electrode active material,

the component may be the same component as exemplified as the above-described single-particle positive electrode active material, may be other components, and may mean a form in which the single particles are aggregated

In an embodiment of the present invention, the positive electrode active material in 100 parts by weight of the positive electrode active material layer may be included in an amount of 80 parts by weight or more and 99.9 parts by weight or less, preferably 90 parts by weight or more and 99.9 parts by weight or less, more preferably 95 parts by weight or more and 99.9 parts by weight or less, and much more preferably 98 parts by weight or more and 99.9 parts by weight or less.

The positive electrode active material layer may include a positive electrode conductive material and a positive electrode binder together with the above-described positive electrode active material.

In this case, the positive electrode conductive material is used to impart conductivity to the electrode, and in the configured battery, it can be used without any particular limitation as long as the positive electrode conductive material has electronic conductivity without causing a chemical change. As a specific example, the positive electrode conductive material may include graphite such as natural graphite and artificial graphite; carbon-based materials such as carbon black, acetylene black, ketjen black, channel black, furnace black, lamp black, thermal black, and carbon fiber; metal powder or metal fiber such as copper, nickel, aluminum, and silver; conductive whiskeys such as zinc oxide and potassium titanate; conductive metal oxides such as titanium oxide; or conductive polymers such as polyphenylene derivatives, or the like, and may be used alone or in combination of 2 types or more thereof.

In addition, the positive electrode binder serves to improve adhesion between the positive electrode active material particles and adhesion between the positive electrode active material and the positive electrode current collector. As a specific example, the positive electrode binder may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropyl cellulose, regenerated cellulose, polyvinylpyrrolidone, tetrafluoroethylene, polyethylene, polypropylene, ethylene-propylene-diene polymer (EPDM), sulfonated-EPDM, styrene butadiene rubber (SBR), fluorine rubber, various copolymers thereof, or the like, and may be used alone or in combination of 2 types or more thereof.

The separator separates the negative electrode and the positive electrode and provides a moving path for lithium ions, and generally, as long as the separator is used as separators in the secondary battery, the separator can be used without any particular limitation, and in particular, it is preferable to have low resistance to ion movement of the electrolyte and to have excellent moisture content in the electrolyte. Specifically, a porous polymer film, for example, a porous polymer film made of a polyolefin-based polymer such as an ethylene homopolymer, a propylene homopolymer, an ethylene/butene copolymer, an ethylene/hexene copolymer, and an ethylene/methacrylate copolymer, or a stacked structure of two or more layers thereof may be used. In addition, a general porous nonwoven fabric, for example, a nonwoven fabric made of high melting point glass fiber, polyethylene terephthalate fiber, etc. may be used. In addition, in order to secure heat resistance or mechanical strength, a coated separator containing a ceramic component or a polymer material may be used, and may optionally be used in a single-layer or multi-layer structure.

Examples of the electrolyte may include organic liquid electrolytes, inorganic liquid electrolytes, solid polymer electrolytes, gel-type polymer electrolytes, solid inorganic electrolytes, and molten inorganic electrolytes that can be used in manufacturing a lithium secondary battery, but are not limited thereto.

Specifically, the electrolyte may include a non-aqueous organic solvent and a metal salt.

Examples of the non-aqueous organic solvent may be used with aprotic organic solvents such as N-methyl-2-pyrrolidinone, propylene carbonate, ethylene carbonate, butylene carbonate, dimethyl carbonate, diethyl carbonate, gamma-butyrolactone, 1,2-dimethoxyethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, trimester phosphate, trimethoxymethane, dioxolane derivative, sulfolane, methyl sulfolane, 1,3-dimethyl-2-imidazolidinone, propylene carbonate derivatives, tetrahydrofuran derivatives, ether, methyl pyropionate, and ethyl pyropionate.

In particular, among the carbonate-based organic solvents, ethylene carbonate and propylene carbonate, which are cyclic carbonates, are highly viscous organic solvents and may be preferably used due to a high dielectric constant to dissociate lithium salts well. When the cyclic carbonate is mixed and used with linear carbonate having low-viscosity and low-dielectric constant such as dimethyl carbonate and diethyl carbonate in an appropriate ratio, an electrolyte having high electrical conductivity may be prepared, which may be more preferably used.

A lithium salt may be used as the metal salt, and the lithium salt is a material that is easily soluble in the non-aqueous electrolyte, and for example, an anion of the lithium salt may be used with one or more selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$.

In addition to the electrolyte components, the electrolyte may also further include one or more additives of, for example, haloalkylene carbonate-based compounds such as difluoroethylene carbonate, pyridine, triethyl phosphite, triethanolamine, cyclic ether, ethylene diamine, n-glyme, hexaphosphoric acid triamide, nitrobenzene derivatives, sulfur, quinone imine dye, N-substituted oxazolidinone, N,N-substituted imidazolidine, ethylene glycol dialkyl ether, ammonium

salt, pyrrole, 2-methoxyethanol or aluminum trichloride, for the purpose of improving life characteristics of the battery, suppressing reduction in battery capacity, and improving battery discharge capacity.

An embodiment of the present invention provides a battery module including the secondary battery as a unit cell and a battery pack including the battery modules. Since the battery module and the battery pack include the secondary battery having high capacity, high rate-rate characteristics and cycle characteristics, the battery module and the battery pack may be used as a power source for a medium or large device selected from the group consisting of an electric vehicle, a hybrid electric vehicle, a plug-in hybrid electric vehicle, and a power storage system.

[Mode for invention]

Hereinafter, preferred Examples of the present invention will be provided in order to facilitate understanding of the present invention. It will be apparent to those skilled in the art, however, that the following examples are only illustrative of the present invention and various changes and modifications can be made within the scope and spirit of the present invention, and that these variations and modifications are within the scope of the appended claims.

**<Examples>**

**Example 1**

For preparation of a SWCNT pre-dispersion solution used for preparation of a negative electrode, 0.4 wt% of SWCNT and 0.6 wt% of a dispersant (PPBT) were added to a solvent water ($H_2O$), and then dispersed using an ultrasonicator to prepare a pre-dispersion solution (solid content of 1%). (amplitude 40%, 10 min)

Thereafter, a mixture was formed by mixing a binder A (weight average molecular weight of 650,000 to 700,000 g/mol) in water, and the mixture was added with the pre-dispersion solution and a planar conductive material (graphite-based, D10 > 2.5 μm, D50 = 5 to 6 μm, D90 < 11 μm) and dispersed at 2500 rpm for 30 min using a homo mixer, and then the mixed mixture was added with a silicon-based active material (Si, D50: 3 μm to 8 μm) and then dispersed at 2500 rpm for 30 min to prepare slurry.

The negative electrode slurry was coated on both surfaces of a copper current collector (thickness: 8 μm) as a negative electrode current collector at a loading amount of 85 mg/25 $cm^2$, roll-pressed, and dried for 10 hours in a vacuum oven of 130°C to form a negative electrode active material layer (thickness: 33 μm) to be formed as a negative electrode (thickness of negative electrode: 41 μm, porosity of negative electrode 40.0%).

**Example 2**

For preparation of a SWCNT pre-dispersion solution used for preparation of a negative electrode, 0.4 wt% of SWCNT and 0.6 wt% of a dispersant (Alginate/PVP) were added to a solvent water ($H_2O$), and then dispersed using an ultrasonicator to prepare a pre-dispersion solution (solid content of 1%). (amplitude 40%, 10 min)

Thereafter, a mixture was formed by mixing a binder A (weight average molecular weight of 650,000 to 700,000 g/mol) in water, and the mixture was added with the pre-dispersion material and a planar conductive material (graphite-based, D10 > 2.5 μm, D50 = 5 to 6 μm, D90 < 11 μm) and dispersed at 2500 rpm for 30 min using a homo mixer, and then the mixed mixture was added with a silicon-based active material (Si, D50: 3 μm to 8 μm) and then dispersed at 2500 rpm for 30 min to prepare slurry.

The negative electrode slurry was coated on both surfaces of a copper current collector (thickness: 8 μm) as a negative electrode current collector at a loading amount of 85 mg/25 $cm^2$, roll-pressed, and dried for 10 hours in a vacuum oven of 130°C to form a negative electrode active material layer (thickness: 33 μm) to be formed as a negative electrode (thickness of negative electrode: 41 μm, porosity of negative electrode 40.0%).

**Comparative Example 1**

For preparation of a SWCNT pre-dispersion solution used for preparation of a negative electrode, 0.4 wt% of SWCNT and 0.6 wt% of a dispersant (tannic acid/PVP) were added to a solvent water ($H_2O$), and then dispersed using an ultrasonicator to prepare a pre-dispersion material (solid content of 1%). (amplitude 40%, 10 min)

Thereafter, a mixture was formed by mixing a binder A (weight average molecular weight of 650,000 to 700,000 g/mol) in water, and the mixture was added with the pre-dispersion material and a planar conductive material (graphite-based, D10 > 2.5 μm, D50 = 5 to 6 μm, D90 < 11 μm) and dispersed at 2500 rpm for 30 min using a homo mixer, and then the mixed mixture was added with a silicon-based active material (Si, D50: 3 μm to 8 μm) and then dispersed at 2500 rpm for 30 min to prepare slurry.

The negative electrode slurry was coated on both surfaces of a copper current collector (thickness: 8 μm) as

a negative electrode current collector at a loading amount of 85 mg/25 $cm^2$, roll-pressed, and dried for 10 hours in a vacuum oven of 130°C to form a negative electrode active material layer (thickness: 33 μm) to be formed as a negative electrode (thickness of negative electrode: 41 μm, porosity of negative electrode 40.0%).

**Comparative Example 2**

From Example 1, except that for preparation of a SWCNT pre-dispersion solution used for preparation of a negative electrode, 0.7 wt% of SWCNT and 0.3 wt% of a dispersant (PPBT) were added to a solvent water ($H_2O$), and then dispersed using an ultrasonicator to prepare a pre-dispersion solution (solid content of 1%), a negative electrode was prepared in the same manner as Example 1 (amplitude 40%, 10 min).

**Comparative Example 3**

From Example 1, except that for preparation of a SWCNT pre-dispersion solution used for preparation of a negative electrode, 0.1 wt% of SWCNT and 0.9 wt% of a dispersant (PPBT) were added to a solvent water ($H_2O$), and then dispersed using an ultrasonicator to prepare a pre-dispersion solution (solid content of 1%), a negative electrode was prepared in the same manner as Example 1 (amplitude 40%, 10 min).

**Comparative Example 4**

In Example 1, the negative electrode pre-dispersion solution was prepared so that the solid content was 7%. However, in the case of Comparative Example 4, since the solid content was more than 5% and the content of SWCNT was too high, the dispersion was not performed properly, and the viscosity was very high, so that the pre-dispersion solution itself was not prepared. Accordingly, negative electrode slurry for forming a negative electrode active material layer was not prepared, and thus evaluation could not be performed.

**<Experimental Example 1>**

As a result of evaluating the half-cell initial capacity of the negative electrodes prepared in Examples and Comparative Examples (0.005 V to 1.0 V, 0.1 C/0.1 C), it may be confirmed in Table 1 below that capacity expression close to a theoretical capacity (to 3500 mAh/g) of the active material was confirmed with equivalent performance, and it was confirmed that a similar capacity value to an existing CMC dispersant-applied electrode was shown.

[Table 1]

| | 1st lithiation | 1st delithiation | Efficiency (%) |
|---|---|---|---|
| Example 1 (Average) | 3831.25 | 3400.36 | 88.76 |
| 1-#1 | 3787.74 | 3412.59 | 90.10 |
| 1-#2 | 3838.08 | 3373.94 | 87.91 |
| 1-#3 | 3867.92 | 3414.56 | 88.28 |
| Example 2 (Average) | 3821.16 | 3397.55 | 88.91 |
| 2-#1 | 3823.03 | 3420.80 | 89.48 |
| 2-#2 | 3819.29 | 3374.30 | 88.35 |
| Comparative Example 1 | 3816.11 | 3326.4 | 87.17 |
| Comparative Example 2 | 3811.64 | 3385.7 | 88.63 |
| Comparative Example 3 | 3775.2 | 3023.3 | 80.08 |
| Comparative Example 4 | Unable to prepare pre-dispersion solution | | |

In Table 1, three types of the same half-cells were manufactured in the same manner as in Example 1, and the evaluation results were divided into 1-#1 to 1-#3, and the average value was indicated as Average.
In Table 1, two types of the same half-cells were manufactured in the same manner as in Example 2, and the evaluation results were divided into 2-#1 and 2-#2, and the average value was indicated as Average.
In other Comparative Examples 1 to 4, as in Example 1, the average value was indicated as Average.

FIG. 3 is a diagram illustrating results of evaluation of half-cell initial capacities of negative electrodes of Examples 1 and 2 according to the present invention.

**<Experimental Example 2>**

The results of half-cell evaluation (0.005 V to 1.0 V, 0.1 C, 50 cycle) of the negative electrodes prepared in Examples and Comparative Examples were shown in Table 2 below. In particular, it can be seen that the electrode performance of Examples 1 and 2 was improved. Particularly, in the case of the negative electrode of Example 1, it was confirmed that PPBT was used as a dispersant to particularly improve dispersibility by wrapping SWCNT well by $\pi$-$\pi$ interaction between a surface with $\pi$ electrons present in the main chain and a surface with $\pi$ electrons of SWCNT, and simultaneously effectively debundling SWCNTs present in a bundle form under the influence of carboxyl groups present in a PPBT side chain, thereby further improving the electrode performance.

FIG. 4 is a diagram illustrating results of evaluation of half-cells of negative electrodes of Examples 1 and 2 according to the present invention.

[Table 2]

| | Cycle retention (%) |
|---|---|
| Example 1 (Average) | 45.3 |
| 1-#1 | 46.9 |
| 1-#2 | 43.7 |
| Example 2 (Average) | 32.2 |
| 2-#1 | 32.5 |
| 2-#2 | 31.9 |
| Comparative Example 1 | 28.9 |
| Comparative Example 2 | 13.6 |
| Comparative Example 3 | 2.37 |
| Comparative Example 4 | Unable to prepare pre-dispersion solution |

In Table 2 above, two types of the same half-cells were manufactured in the same manner as in Example 1, and the evaluation results were divided into 1-#2 and 1-#2, and the average value was indicated as Average.

In Table 2 above, two types of the same half-cells were manufactured in the same manner as in Example 2, and the evaluation results were divided into 2-#1 and 2-#2, and the average value was indicated as Average.

In other Comparative Examples 1 to 4, as in Example 1, the average value was indicated as Average.

As can been seen in Experimental Examples 1 and 2, it was confirmed that the negative electrode pre-dispersion solution according to the present invention had excellent dispersibility of carbon nanotubes by satisfying the solid content of the pre-dispersion material, the content of carbon nanotubes, and the content of the dispersant in the pre-dispersion solution in predetermined ranges. Accordingly, when the bonding force between the carbon nanotubes and silicon was strengthened, the path between the conductive materials was maintained even after repeated charging and discharging, and the silicon active material may be uniformly used. Accordingly, it was confirmed that it is possible to minimize the volume expansion during charging and discharging in the case of using existing silicon-based active materials by using the negative electrode composition according to the present invention.

**<Experimental Example 3>**

CHC cycle evaluation results (0.005 V to 1.0 V, charge/discharge: 0.5 C/0.5 C, performing the limited capacity evaluation using only half (SOC 50%) of the capacity based on an initial capacity evaluation result value) of the negative electrodes prepared in Examples 1 and 2 and Comparative Example 1 were confirmed in FIG. 5.

Specifically, as can be seen in FIG. 5, as the number of cycles of the negative electrode increased, it was confirmed that the capacity retention was first decreased at a small number of cycles in Comparative Example 1, as compared with Examples 1 and 2.

In particular, as can be seen from FIG. 5, in the case of Example 1, unlike other dispersants, it was confirmed that there were carboxyl groups as a functional group and an intramolecular conjugation structure, thereby contributing

to the improvement of electrode lifespan performance to particularly have the excellent performance.

In the case of using the silicon-based active material, there is a problem in that the conductive path between the conductive materials was broken due to the expansion of the volume. In order to solve the problem, it was confirmed that instead of adding a separate composition to the negative electrode composition according to the embodiment of the present invention, carboxyl groups are included as a functional group of the dispersant included in the carbon nanotube pre-dispersion solution to form hydrogen bonds with -OH groups on the surface of the silicon-based active material, thereby strengthening the bonding force between the carbon nanotubes and silicon.

That is, when the bonding force between the carbon nanotubes and silicon was strengthened, the path between the conductive materials was maintained even during repeated charging and discharging, and the silicon active material may be uniformly used. Accordingly, it was confirmed that it is possible to minimize the volume expansion during charging and discharging in the case of using existing silicon-based active materials by using the negative electrode composition according to the present invention.

## Claims

1. A negative electrode pre-dispersion solution comprising:

   a pre-dispersion material containing carbon nanotubes and a dispersant; and
   a dispersion medium,
   wherein the dispersant includes carboxyl groups as a functional group,
   the solid content of the pre-dispersion material is 5% or less based on the negative electrode pre-dispersion solution, and
   20 parts by weight or more and 60 parts by weight or less of the carbon nanotubes; and 40 parts by weight or more and 80 parts by weight or less of the dispersant are included based on 100 parts by weight of the pre-dispersion material.

2. The negative electrode pre-dispersion solution of claim 1, wherein the dispersant includes one selected from the group consisting of xanthan gum; alginate; and a compound represented by the following Chemical Formula 1:

   [Chemical Formula 1]

   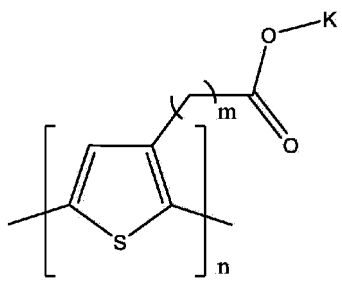

   in Chemical Formula 1,

   m is an integer of 1 to 10, and
   n is an integer of 1 to 1000.

3. The negative electrode pre-dispersion solution of claim 1, wherein the weight average molecular weight of the dispersant is 10,000 g/mol or more and 100,000 g/mol or less.

4. The negative electrode pre-dispersion solution of claim 1, wherein the viscosity of the negative electrode pre-dispersion solution is 100 cP or more and 10,000 cP or less.

5. A negative electrode composition comprising:

   a silicon-based active material; the negative electrode pre-dispersion solution according to any one of claims 1 to 4; and a negative electrode binder,

wherein the silicon-based active material is included in an amount of 60 parts by weight or more based on 100 parts by weight of the negative electrode composition.

**6.** The negative electrode composition of claim 5, further comprising:

a negative electrode conductive material,
wherein the negative electrode conductive material includes one or more selected from the group consisting of a dot-type conductive material; and a planar conductive material.

**7.** The negative electrode composition of claim 6,
wherein the negative electrode conductive material is included in an amount of 5 parts by weight or more and 40 parts by weight or less based on 100 parts by weight of the negative electrode composition.

**8.** The negative electrode composition of claim 5,
wherein the negative electrode pre-dispersion solution is included in an amount of 0.01 part by weight or more and 20 parts by weight or less based on 100 parts by weight of the negative electrode composition.

**9.** The negative electrode composition of claim 5,
wherein the silicon-based active material includes one or more selected from the group consisting of SiOx ($x = 0$), SiOx ($0 < x < 2$), SiC, and Si alloys.

**10.** The negative electrode composition of claim 5,
wherein the silicon-based active material includes one or more selected from the group consisting of SiOx ($x = 0$), SiOx ($0 < x < 2$), and metal impurities and the SiOx ($x = 0$) is included in an amount of 70 parts by weight or more based on 100 parts by weight of the silicon-based active material.

**11.** The negative electrode composition of claim 5,
wherein hydroxyl groups (-OH) on the surface of the silicon-based active material and carboxyl functional groups of the negative electrode pre-dispersion solution form hydrogen bonds with each other.

**12.** A preparation method of a negative electrode composition comprising the steps of:

forming a pre-dispersion material by mixing carbon nanotubes and a dispersant containing carboxyl groups as a functional group;
including a dispersion medium in the pre-dispersion material so that the solid content of the pre-dispersion material is 5% or less;
dispersing the pre-dispersion material containing the dispersion medium;
forming a mixture by mixing a negative electrode binder with water and adding and first mixing the pre-dispersion material to the mixture; and
adding and second mixing a silicon-based active material to the mixed mixture,
wherein 20 parts by weight or more and 60 parts by weight or less of the carbon nanotubes; and 40 parts by weight or more and 80 parts by weight or less of the dispersant are included based on 100 parts by weight of the pre-dispersion material.

**13.** The preparation method of the negative electrode composition of claim 12, wherein in the first mixing step, one or more selected from the group consisting of a dot-type conductive material; and a planar conductive material are further included.

**14.** The preparation method of the negative electrode composition of claim 12, wherein the first mixing and the second mixing steps are steps of mixing at 2,000 rpm to 3,000 rpm for 10 minutes to 60 minutes.

**15.** The preparation method of the negative electrode composition of claim 12, wherein the dispersing of the pre-dispersion material is dispersing the pre-dispersion material using a dispersing device capable of dispersing at high stress, high pressure, or high speed.

**16.** A negative electrode for a lithium secondary battery comprising:

a negative electrode current collector layer; and

a negative electrode active material layer comprising a negative electrode composition according to claim 5 formed on one surface or both surfaces of the negative electrode current collector layer.

**17.** A lithium secondary battery comprising:

a positive electrode;
the negative electrode for the lithium secondary battery according to claim 16;
a separator provided between the positive electrode and the negative electrode; and
an electrolyte.

[Figure 1]

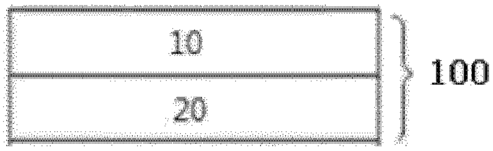


[Figure 2]

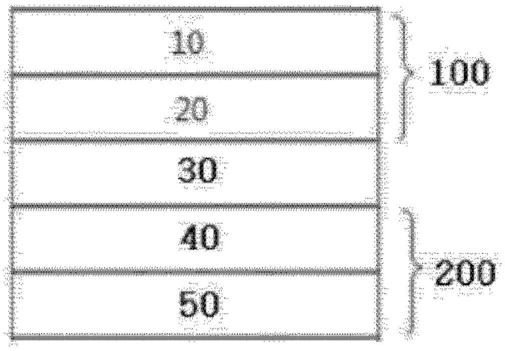


[Figure 3]

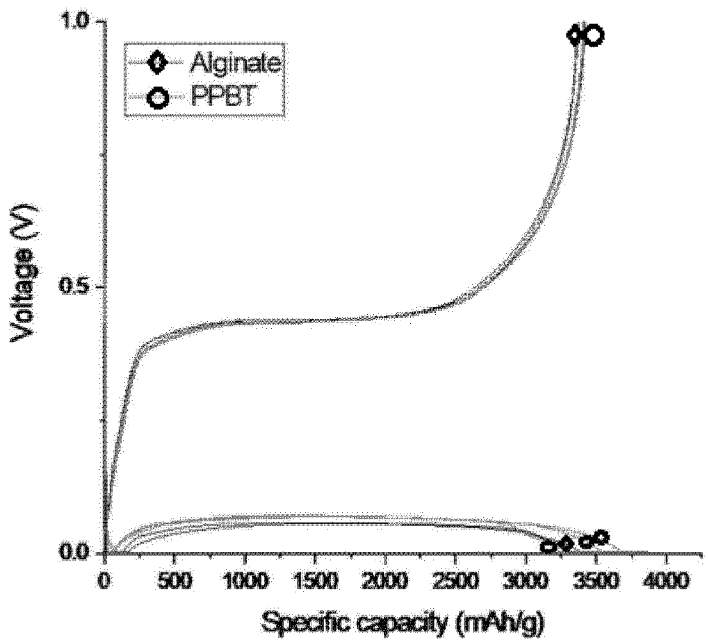

[Figure 4]

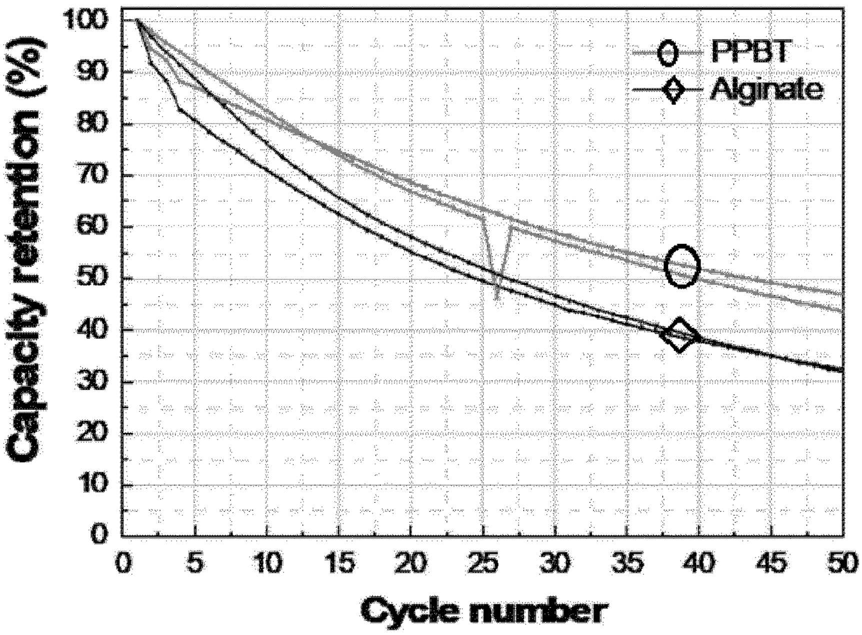


[Figure 5]

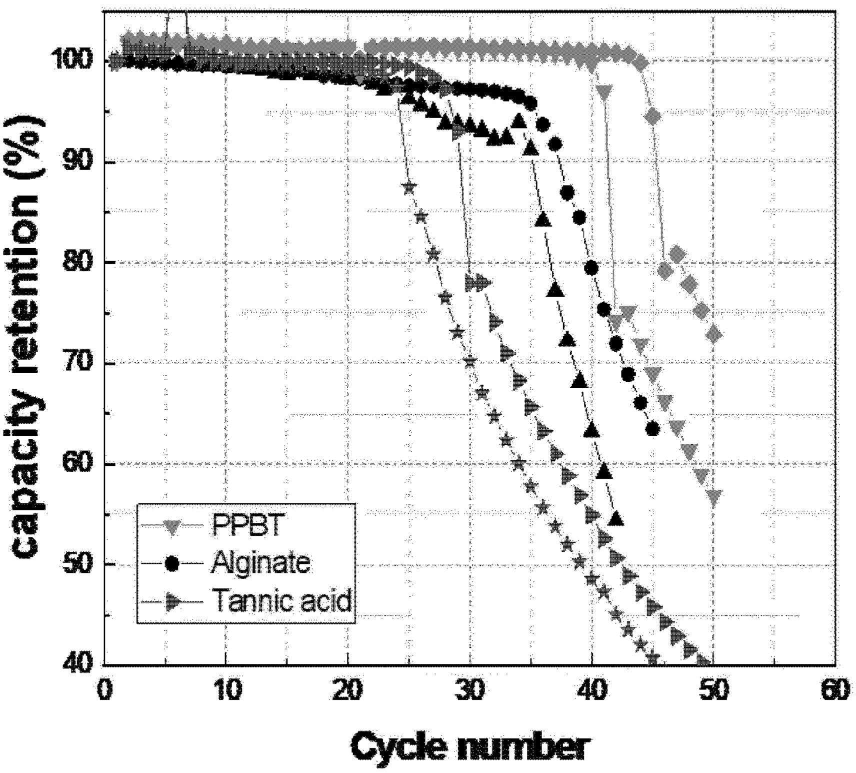

**INTERNATIONAL SEARCH REPORT**

International application No. **PCT/KR2022/016187**

**A. CLASSIFICATION OF SUBJECT MATTER**

**H01M 4/62**(2006.01)i; **H01M 4/139**(2010.01)i; **H01M 4/1391**(2010.01)i; **H01M 4/48**(2010.01)i; **H01M 4/38**(2006.01)i; **H01M 4/58**(2010.01)i; **H01M 10/052**(2010.01)i; **C01B 32/174**(2017.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 4/62(2006.01); C01B 32/174(2017.01); H01M 10/0525(2010.01); H01M 4/133(2010.01); H01M 4/134(2010.01); H01M 4/139(2010.01); H01M 4/1393(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus) & keywords: 음극(negative electrode), 탄소나노튜브(carbon nanotube), 분산제(dispersant), 카복시기(carboxyl group)

**C. DOCUMENTS CONSIDERED TO BE RELEVANT**

| Category* | Citation of document, with indication, where appropriate, of the relevant passages | Relevant to claim No. |
|---|---|---|
| X | KR 10-2020-0018328 A (LG CHEM, LTD.) 19 February 2020 (2020-02-19) See claims 1, 3, 5 and 9-11; paragraphs [0073], [0075], [0081], [0082], [0089], [0090], [0123] and [0124]; and table 1. | 1,3-10,12-17 |
| Y | | 2,11 |
| Y | KWON, Y. H. et al. Carbon nanotube web with carboxylated polythiophene “assist” for high-performance battery electrodes. ACS nano. 2018, vol. 12, no. 4, pp. 3126-3139. See abstract; page 3127, right column, lines 6-15; and figure 1. | 2,11 |
| A | KR 10-2018-0075180 A (LG CHEM, LTD.) 04 July 2018 (2018-07-04) See claims 1-21. | 1-17 |
| A | KR 10-2014-0147414 A (LG CHEM, LTD.) 30 December 2014 (2014-12-30) See entire document. | 1-17 |

☑ Further documents are listed in the continuation of Box C. ☑ See patent family annex.

* Special categories of cited documents:
“A” document defining the general state of the art which is not considered to be of particular relevance
“D” document cited by the applicant in the international application
“E” earlier application or patent but published on or after the international filing date
“L” document which may throw doubts on priority claim(s) or which is cited to establish the publication date of another citation or other special reason (as specified)
“O” document referring to an oral disclosure, use, exhibition or other means
“P” document published prior to the international filing date but later than the priority date claimed
“T” later document published after the international filing date or priority date and not in conflict with the application but cited to understand the principle or theory underlying the invention
“X” document of particular relevance; the claimed invention cannot be considered novel or cannot be considered to involve an inventive step when the document is taken alone
“Y” document of particular relevance; the claimed invention cannot be considered to involve an inventive step when the document is combined with one or more other such documents, such combination being obvious to a person skilled in the art
“&” document member of the same patent family

| Date of the actual completion of the international search | Date of mailing of the international search report |
|---|---|
| **09 February 2023** | **10 February 2023** |

Name and mailing address of the ISA/KR

**Korean Intellectual Property Office**
**Government Complex-Daejeon Building 4, 189 Cheongsa-ro, Seo-gu, Daejeon 35208**

Facsimile No. **+82-42-481-8578**

Authorized officer

Telephone No.

Form PCT/ISA/210 (second sheet) (July 2022)

INTERNATIONAL SEARCH REPORT

International application No.
PCT/KR2022/016187

C. DOCUMENTS CONSIDERED TO BE RELEVANT

| Category* | Citation of document, with indication, where appropriate, of the relevant passages | Relevant to claim No. |
|---|---|---|
| A | KR 10-2019-0077399 A (GRST INTERNATIONAL LIMITED) 03 July 2019 (2019-07-03) See entire document. | 1-17 |
| A | JP 2021-050106 A (TOYO INK SC HOLDINGS CO., LTD.) 01 April 2021 (2021-04-01) See entire document. | 1-17 |

Form PCT/ISA/210 (second sheet) (July 2022)

**INTERNATIONAL SEARCH REPORT**
**Information on patent family members**

International application No.
**PCT/KR2022/016187**

| Patent document cited in search report | Publication date (day/month/year) | Patent family member(s) | Publication date (day/month/year) |
|---|---|---|---|
| KR 10-2020-0018328 A | 19 February 2020 | None | |
| KR 10-2018-0075180 A | 04 July 2018 | KR 10-2314626 B1 | 20 October 2021 |
| KR 10-2014-0147414 A | 30 December 2014 | KR 10-1621519 B1 | 16 May 2016 |
| KR 10-2019-0077399 A | 03 July 2019 | AU 2017-352947 A1 | 23 May 2019 |
| | | AU 2017-352947 B2 | 04 November 2021 |
| | | CA 3041000 A1 | 11 May 2018 |
| | | CN 109923705 A | 21 June 2019 |
| | | CN 109923705 B | 05 April 2022 |
| | | EP 3535794 A1 | 11 September 2019 |
| | | EP 3535794 A4 | 15 July 2020 |
| | | EP 3535794 B1 | 02 March 2022 |
| | | ES 2908715 T3 | 03 May 2022 |
| | | JP 2019-537212 A | 19 December 2019 |
| | | JP 6946427 B2 | 06 October 2021 |
| | | SG 11201911713 A | 30 January 2020 |
| | | TW 201822393 A | 16 June 2018 |
| | | US 11502288 B2 | 15 November 2022 |
| | | US 2019-0260011 A1 | 22 August 2019 |
| | | WO 2018-082601 A1 | 11 May 2018 |
| JP 2021-050106 A | 01 April 2021 | None | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020210142054
- JP 2009080971 A